# EUROPÄISCHE PATENTSCHRIFT

(11) **EP 2 842 396 B1**
(45) Veröffentlichungstag und Bekanntmachung des Hinweises auf die Patenterteilung: **19.07.2023**
(21) Anmeldenummer: 13717960.2
(22) Anmeldetag: 23.04.2013
(51) Int. Cl.: H05B 47/10, G08G 1/01, G08G 1/08, G08G 1/095, G08G 1/07, G08G 1/0967, H05B 47/19, H05B 47/185, H05B 47/18, H05B 47/105, H05B 47/11, H05B 47/16, F21Y 115/10

(54) **STRASSEN- UND WEGBELEUCHTUNGSSYSTEM**
ROAD AND PATH LIGHTING SYSTEM
SYSTÈME D'ÉCLAIRAGE DE VOIES DE CIRCULATION

(30) Priorität: 24.04.2012 DE 102012206691
(43) Veröffentlichungstag der Anmeldung: 04.03.2015
(73) Patentinhaber: Zumtobel Lighting GmbH, 6850 Dornbirn (AT)
(72) Erfinder: WERNER, Walter, A-6850 Dornbirn (AT); SIEGEL, Martin, 88131 Bodolz (DE)
(74) Vertreter: Kiwit, Benedikt
(86) Internationale Anmeldenummer: PCT/EP2013/058364
(87) Internationale Veröffentlichungsnummer: WO 2013/160284

(56) Entgegenhaltungen:
- DE-U1-202007 002 125
- US-A1- 2006 056 855
- US-A1- 2007 109 142
- US-A1- 2012 062 123

## Beschreibung

Die vorliegende Erfindung betrifft ein Außenbeleuchtungssystem, insbesondere ein Straßen- oder Wegbeleuchtungssystem mit ansteuerbarer Lichtquelle sowie ein Verfahren zur Ausgabe von Signalen, beispielsweise optischen Signalen oder Datensignalen, mittels des vorgenannten Systems.

Aus dem Stand der Technik sind Straßen- oder Wegbeleuchtungssysteme bekannt, welche in der Regel eine oder mehrere Beleuchtungsvorrichtungen in Form von Straßenlaternen mit Mast sowie an dessen oberem Ende vorgesehener Lichtquelle umfassen. Diese bekannten Außenbeleuchtungssysteme dienen grundsätzlich dazu, bei schlechten Witterungsverhältnissen oder in der Dämmerung oder bei Nacht die Umgebung (bspw. eine Straße oder einen Fußgängerweg) auszuleuchten.

Um die Beleuchtung an entsprechende Umgebungsbedingungen (z.B. Lichtverhältnisse) anzupassen oder auf Basis eines sich in der Nähe befindlichen Objektes auf dieses anzusprechen, können die vorhandenen Beleuchtungsvorrichtungen mit einer Sensorik versehen werden. Insbesondere bei hohen Masten oder in stark gegliedertem Gelände ist es nachteilig, die Sensorik an oder in der Nähe des Leuchtenkopfes vorzusehen. Vielmehr wird eine zusätzliche, die Sensorik aufweisende Box in einer vorbestimmten Höhe (i.d.R. 3 bis 5m oberhalb des Bodens) an dem Mast montiert; also in etwa auf mittlerer Höhe des Masts, wo die besten Informationen über die Umgebung, bspw. bei der Verwendung von Anwesenheitssensoren oder dergleichen, erhalten werden können. Das Anbringen entsprechender Sensoren am Mast war allerdings bislang mit einem hohen Aufwand verbunden, da die Stromversorgung der Sensorik sichergestellt werden musste und ferner Maßnahmen vorgesehen werden mussten, um die Übermittlung der Sensorsignale an den Leuchtenkopf sicherzustellen. Es musste bspw. ein Loch in den Mast eingebracht werden, um einen elektrischen Anschluss für den Sensor über die elektrische Ausrüstung der Leuchte zur Verfügung zu stellen, was einerseits einen verhältnismäßig hohen Aufwand nach sich zieht und andererseits auch aus Gewährleistungsgründen sowie weiteren rechtlichen Gründen zu Problemen führen kann.

Des Weiteren sind bisher bekannte Straßen- oder Wegbeleuchtungssystem nicht dafür vorgesehen, situationsabhängig auf Ereignisse in der Umgebung durch gezieltes Ansteuern einer Lichtquelle und Ausgabe von Licht- oder Dateninformationen hinzuweisen bzw. darüber in sonstiger Weise zu informieren. Beispielsweise wird bisher im Straßenverkehr auf Gefahrensituationen lediglich durch gewöhnliche Verkehrsschilder oder LED-Displays (bspw. Verkehrsleitsysteme) hingewiesen, welche eigens für einen bestimmten Zweck ausgebildet sind. Dies erfordert den Einsatz von speziell angepassten elektronischen und mechanischen Vorrichtungen, welche zu einer Steigerung der Kosten im Verkehrswesen führt, da eine Änderung der anzuzeigenden Informationen einen Austausch oder wenigstens eine Anpassung der Anlage selbst erfordert. Darüber hinaus sind insbesondere elektronischen Verkehrsleitsysteme auf einen bestimmten Satz von Verkehrszeichen begrenzt und deren Sichtbarkeit ist zudem bei schlechten Witterungsverhältnissen (z.B. bei Nebel oder Rauch) eingeschränkt.

Die US 2006/0056855 A1 offenbart ein Straßenlatemensteuerungssystem, bei dem Beleuchtungen mit einer Steuerungseinheit verbunden sind. Die Beleuchtungen können derart gesteuert werden, dass jene Lampen, die am nächsten zu einer Unfallstelle sind, schnell blinken, um einen Autofahrer entsprechend zu warnen.

Es ist somit eine Aufgabe der Erfindung, ein Straßen- oder Wegbeleuchtungssystem sowie ein Verfahren zur Ausgabe von Signalen mittels eines solchen Systems auf einfache und kostengünstige Weise bereitzustellen, welches gleichzeitig eine flexible situationsabhängige Lichtabgabe sowie vorzugsweise Informationsausgabe oder allgemein Signalabgabe ermöglicht.

Diese Aufgabe wird durch den Gegenstand der unabhängigen Ansprüche gelöst. Die abhängigen Ansprüche bilden den zentralen Gedanken der Erfindung in besonders vorteilhafter Weise weiter.

Die Erfindung betrifft ein Straßen- und Wegbeleuchtungssystem aufweisend wenigstens eine oder auch mehrere Beleuchtungsvorrichtungen mit jeweils wenigstens einer Projektionseinheit zum Projizieren von Signalen auf eine Projektionsfläche, und ein Kommunikationsmodul, welches derart ausgebildet ist, die Projektionseinheit auf Basis eingehender Eingangssignale zu steuern. Ferner weist das Straßen- und Wegbeleuchtungssystem eine Sensoreinheit auf, die derart ausgebildet ist, dass sie bei Funkverbindungsproblemen zwischen dem Kommunikationsmodul und der Beleuchtungsvorrichtung Signale übermittelt.

Die Verwendung einer Projektionseinheit in einer Beleuchtungsvorrichtung ermöglicht es, jegliche individuell vorgegebenen Informationen situationsabhängig auf Basis entsprechender Eingangssignale in Form einer Lichtabgabe auszugeben. Ferner ist das System nicht auf einen vorgegebenen Satz an Informationen oder Signale beschränkt, da mittels der Projektionseinheit alle denkbaren, insbesondere optischen Informationen oder Signale ausgegeben werden können.

Gemäß einem Beispiel betrifft die Erfindung ein Straßen- und Wegbeleuchtungssystem aufweisend eine Beleuchtungsvorrichtung mit einer Lichtquelle, eine/die Sensoreinheit aufweisend einen Sensor, wobei die Sensoreinheit an der Beleuchtungsvorrichtung und von der Lichtquelle beabstandet vorgesehen ist, ein Kommunikationsmodul zum Ansteuern der Lichtquelle auf Basis der mittels des Sensors erfassten Daten, und eine drahtlose Datenkommunikationseinheit, mittels der die Sensoreinheit nur drahtlos mit einem Empfänger des Kommunikationsmoduls verbunden ist, wobei die Sensoreinheit vorzugsweise eine eigenständige Energiequelle aufweist.

Gemäß einem weiteren Beispiel betrifft die Erfindung ein Straßen- und Wegbeleuchtungssystem aufweisend eine Beleuchtungsvorrichtung mit einer Lichtquelle, eine Sendeeinheit aufweisend einen Sender, wobei die Sendeeinheit von der Lichtquelle beabstandet ist, ein Kommunikationsmodul zum Ansteuern der Lichtquelle auf Basis von mittels der Sendeeinheit übermittelten Daten, und eine drahtlose Datenkommunikationseinheit, mittels der die Sendeeinheit nur drahtlos mit einem Empfänger des Kommunikationsmoduls verbunden ist, wobei die Sendeeinheit vorzugsweise eine eigenständige Energiequelle aufweist.

Die Sendeeinheit kann grundsätzlich auch als vorbeschrieben Sensoreinheit ausgebildet sein, welche dann den vorgenannten Sensor aufweist und vorzugsweise an (der Außenseite) der Beleuchtungsvorrichtung vorgesehen ist.

Mittels der drahtlos mit dem Kommunikationsmodul verbundenen Sensoreinheit oder Sendeeinheit kann auf einfache und kostengünstige Weise und ohne das Vorsehen von Bohrungen oder den separaten elektrischen Anschluss von Verkabelungen eine Beleuchtungsvorrichtung bzw. ein diese aufweisendes System bereitgestellt werden, welches in Abhängigkeit der jeweiligen Sensoren oder Sendeeinheit eine flexible und insbesondere situationsabhängige Lichtabgabe und vorzugswiese Informationsausgabe über die Lichtquelle ermöglicht.

Erfindungsgemäß können die vorgenannten Aspekte der Erfindung einzeln oder in jeglicher Kombination vorliegen. Dabei können des Weiteren die folgenden, bevorzugten Merkmale vorgesehen sein:
Die Projektionseinheit kann beispielsweise eine zur Beleuchtung vorgesehene Lichtquelle der Beleuchtungsvorrichtung selbst oder eine weitere (also zusätzliche) Lichtquelle, wie beispielsweise eine Lasereinheit oder eine LED-Leuchte, sein bzw. aufweisen.

Die Projektionsfläche kann jegliche Fläche sein, welche zur Projektion geeignet ist, also insbesondere eine ebene und vorzugsweise einfarbige Fläche, beispielsweise eine Straßen- oder Wegoberfläche oder (Haus-)Wand oder eine zusätzliche Projektionsfläche, wie beispielsweise eine Projektionstafel. Die Projektionseinheit ist vorzugsweise derart ausgelegt, dass sie ein Signal oder unterschiedliche Signale auf eine oder mehrere Projektionsflächen projizieren kann. Die von der Projektionseinheit ausgegebenen Signale sind vorzugsweise Lichtsignale, welche auf der Projektionsfläche ein optisches Signal bilden.

Das Kommunikationsmodul ist vorzugsweise derart ausgelegt, dass ausgehend von den eingehenden Eingangssignalen Ausgangssignale generiert und an die Umgebung abgegeben werden können. Die Abgabe geschieht vorzugsweise via Powerline-Kommunikation oder Kurzstreckenfunk oder unter Verwendung des Systems bzw. des Kommunikationsmoduls als Relaisstation. Vorzugsweise werden die Ausgangssignale an eine Verkehrsleitzentrale oder ein car-to-car Kommunikationsnetzwerk oder ein anderes Kommunikationsmodul einer weiteren Beleuchtungsvorrichtung des Systems oder an sonstige Empfänger (bspw. Sendeeinheit; Mobiltelefon eines Passanten, etc) abgegeben. Die Ausgangssignale sind dabei vorzugsweise Datensignale, welche bei einem Empfänger, beispielsweise in einer Verkehrsleitzentrale oder einem Fahrzeug oder auf einem anderen Empfangsgerät (bspw. Smartphone), in optische und/oder akustische Signale umgewandelt werden können.

Die Eingangssignale sind vorzugsweise ebenfalls Datensignale, welche dem Kommunikationsmodul via Powerline-Kommunikation oder von Sensoren, beispielsweise der Sensoreinheit des Systems oder eines umliegenden Straßensystems, oder von einem car-to-car Kommunikationsnetzwerk (bspw. mittels Kurzstreckenfunk oder dergleichen) oder einer sonstigen, vorzugsweise externen Sendeeinheit übermittelt werden können.

Das Kommunikationsmodul ist vorzugsweise derart ausgebildet, dass es die Beleuchtungsvorrichtung, vorzugsweise die Lichtquelle der Beleuchtungsvorrichtung und/oder die Projektionseinheit, auf Basis der mittels des Sensors bzw. der Sensoren erfassten und übermittelten oder von der Sendeeinheit übermittelten Daten anzusteuern und/oder als Ausgangssignale an die Umgebung abzugeben. Hierzu ist vorzugsweise eine drahtlose Datenkommunikationseinheit vorgesehen, mittels der die den Sensor aufweisende Sensoreinheit oder die Sendeeinheit nur drahtlos mit einem Empfänger des Kommunikationsmoduls verbunden ist. Für einen autarken Betrieb weist die Sensoreinheit bzw. die Sendeeinheit vorzugsweise eine eigenständige Energiequelle auf. Diese Energiequelle ist vorzugsweise ein Solarmodul, bspw. mit Energie-Zwischenspeicher, oder ein interner Energiespeicher, wie bspw. ein Akkumulator.

Die Sensoren der Sensoreinheit (oder bspw. auch in einer Sendeeinheit) sind vorzugsweise aus der Gruppe von Lichtsensoren, Temperatursensoren, Bewegungssensoren oder Rauchsensoren oder einer Kombination derselben gewählt. Das Kommunikationsmodul ist dann vorzugsweise derart ausgebildet, dass es die Lichtquelle auf Basis der mit dem Lichtsensor erfassten Lichtverhältnisse, auf Basis der mit dem Temperatursensor erfassten Temperatur, auf Basis von sich im Erfassungsbereich des Bewegungssensors befindlichen, vorzugsweise beweglichen Objekten und/oder auf Basis von mittels des Rauchsensors erfassten Rauchvorkommens oder Rauchdichte ansteuert. Darüber hinaus sind auch andere von den Sensoren erfassten Daten zur Ansteuerung denkbar. Ferner können auch andere Arten von Sensoren alternativ oder zusätzlich vorgesehen werden, auf Basis deren erfasster Ergebnisse die Lichtquelle über das Kommunikationsmodul angesteuert werden kann. Der Sensor bzw. die Sensoreinheit ist vorzugsweise an der Außenseite der Beleuchtungsvorrichtung vorgesehen, insbesondere bevorzugt an der Außenseite eines die Beleuchtungsvorrichtung aufweisenden Mastes, an dessen oberen Ende vorzugsweise die Lichtquelle angeordnet ist.

Die drahtlose Verbindung zwischen Sensoreinheit bzw. Sendeeinheit und Empfänger des Kommunikationsmoduls sowie auch alle anderen in dieser Anmeldung beschriebenen drahtlosen Verbindungen werden vorzugsweise mittels Kurzstreckenfunk bereitgestellt, wobei bevorzugt eine Übertragung mittels Bluetooth Standard, insbesondere den Bluetooth 4.0 Standard bereitgestellt wird.

Das Kommunikationsmodul ist vorzugsweise derart ausgebildet, dass die anzusteuernde Lichtquelle ferner auf Basis von drahtlos an die Kommunikationseinheit übermittelten Daten eines externen Sendemoduls, wie z.B. der vorgenannten Sendeeinheit, ansteuerbar ist. Besonders bevorzugt kann die Beleuchtungsvorrichtung oder das Kommunikationsmodul bzw. die Ansteuerung der Lichtquelle mittels drahtlos oder drahtgebunden an das Kommunikationsmodul übermittelter Daten parametriert werden, um je nach Anforderung individuell angepasst zu werden. Eine Ansteuerung der Lichtquelle oder Parametrierung des Kommunikationsmoduls kann dabei abhängig von einer Berechtigung des die Daten übermittelnden Senders, wie dem externen Sendemodul, ausgeführt oder nicht ausgeführt werden.

Ferner kann das Kommunikationsmodul einen Funksender aufweisen, welcher mit anderen Kommunikationsmodulen anderer Beleuchtungsvorrichtungen des Systems drahtlos (vorzugsweise via Kurzstreckenfunk) verbunden ist, wobei das Kommunikationsmodul ferner derart ausgebildet ist, die Beleuchtungsvorrichtung auf Basis der von den anderen Kommunikationsmodulen der anderen Beleuchtungsvorrichtungen übermittelten Daten zu steuern bzw. anzusteuern. Somit kann eine automatische und interaktive Informationsabgabe bzw. Lichtabgabe bereitgestellt werden.

Das Kommunikationsmodul kann darüber hinaus eine Verarbeitungseinheit aufweisen, in der die Eingangssignale, insbesondere die von dem Sensor erfassten bzw. von der Sendeeinheit übermittelten Daten, ausgewertet und in Ansteuersignale oder Ausgangssignale umgewandelt werden. Die Verarbeitungseinheit kann hierzu entweder mit der Sensoreinheit bzw. der Sendeeinheit oder der Beleuchtungsvorrichtung direkt verbunden sein. Ein Datensender des Kommunikationsmoduls, welcher vorzugsweise in der Sensoreinheit bzw. der Sendeeinheit vorgesehen ist, sowie der Empfänger des Kommunikationsmoduls, welcher vorzugsweise in der Beleuchtungsvorrichtung, besonders vorzugsweise an der Lichtquelle vorgesehen ist, stellen gemeinsam vorzugsweise die drahtlose Verbindung zwischen Sensoreinheit bzw. der Sendeeinheit und Empfänger des Kommunikationsmoduls bereit.

Im Folgenden werden weitere Vorteile der Erfindung beispielhaft anhand von Ausführungsbeispielen gemäß der Zeichnungen der begleitenden Figuren beschrieben.
- Fig. 1: zeigt ein Straßen- oder Wegbeleuchtungssystem gemäß einem ersten Ausführungsbeispiel,
- Fig. 2: zeigt ein Straßen- oder Wegbeleuchtungssystem gemäß einem zweiten Ausführungsbeispiel,
- Fig. 3: zeigt ein Straßen- oder Wegbeleuchtungssystem gemäß einem dritten Ausführungsbeispiel,
- Fig. 4: zeigt eine optische und akustische Anzeigeeinrichtung in einem Fahrzeug mit car-to-car Kommunikationssystem.

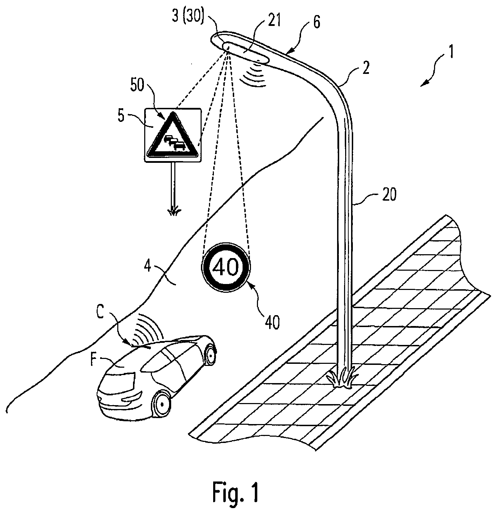

Figur 1 zeigt ein Straßen- oder Wegbeleuchtungssystem 1 (im Folgenden auch als System bezeichnet) gemäß der Erfindung. Dieses kann auch allgemein als Außenbeleuchtungssystem bezeichnet werden. Das System 1 weist eine oder auch mehrere Beleuchtungsvorrichtungen 2 auf. Die Beleuchtungsvorrichtung 2 ist vorzugsweise ein Laternenmast 20 (im Folgenden auch als Mast bezeichnet), an dessen oberen Ende eine Lichtquelle 21 (30) zum gerichteten oder ungerichteten Ausleuchten der Umgebung der Beleuchtungsvorrichtung 2 angeordnet ist.

Die Beleuchtungsvorrichtung 2 weist eine Projektionseinheit 3 auf, mittels der Signale 40, 50 auf eine Projektionsfläche 4, 5 projiziert werden können. Als Projektionsfläche dienen vorzugsweise bereits vorhandenen Flächen, wie beispielsweise eine Straßen- oder Wegoberfläche 4 oder eine (Haus-)Wand. Alternativ oder zusätzlich kann auch eine zusätzliche Projektionsfläche bereitgestellt werden, welche insbesondere eine Projektionstafel 5 umfasst. Vorzugsweise sind die Projektionsflächen 4, 5 eben, unbeschriftet und einfarbig, um darauf projizierte Signale bestmöglicht darzustellen. Die Projektionseinheit 3 kann vorzugsweise derart ausgebildet sein, dass sie auch auf unebenen oder schrägen Flächen ein optisches Signal darstellen kann, wobei die Projektionseinheit 3 die Unebenheiten oder den Winkel zur Projektionsfläche in beispielsweise bei Beamern bekannter Weise ausgleicht.

Die Projektionseinheit 3 kann die zur Beleuchtung vorgesehene Lichtquelle 21 der Beleuchtungsvorrichtung 2 oder eine weitere Lichtquelle 30 aufweisen. Mit anderen Worten weist die Beleuchtungsvorrichtung 2 entweder nur die Projektionseinheit 3 auf, welche gleichzeitig als deren Lichtquelle 21 dient, oder die Projektionseinheit 3 ist neben einer eigenen Lichtquelle 21 der Beleuchtungsvorrichtung 2 als zusätzliche Lichtquelle 30 vorgehsehen. In dem Ausführungsbeispiel der Figur 1 ist die Projektionseinheit 3 als zusätzliches Element der Straßenbeleuchtung vorgesehen; sie kann, wie zuvor bereits erläutert, aber auch die zur Beleuchtung vorgesehene Lichtquelle 21 der Beleuchtungsvorrichtung 1 selbst für diese Funktion nutzen. Die Lichtquelle 21, 30 der Projektionseinheit 3 weist vorzugsweise eine Lasereinheit auf. Wird eine Lasereinheit (bspw. ein Laserprojektor) als Lichtquelle 21, 20 verwendet, dann besteht ein wesentlicher Vorteil gegenüber herkömmlichen Projektoren darin, dass keine Fokussieroptik verwendet werden muss, da der Laserstrahl aufgrund der geringen Divergenz eine extrem hohe Tiefenschärfe hat. Eine Projektion mittels Laser hat aufgrund seiner geringen Divergenz und hohen Leuchtdichte ferner den Vorteil einer guten Wahrnehmbarkeit im Vergleich zu üblichen Lichtquellen oder auch LED-Leuchten; auch bei schlechten Sichtverhältnissen durch Nebel oder Rauch. Alternativ zur Projektion mittels Laser könnte auch die Verwendung entsprechender, auf LEDs basierender Einheiten (LED-Leuchten) oder sonstiger Lichtquellen vorgesehen sein. Die Projektion der entsprechenden Informationen bzw. Signale kann folglich auf unterschiedliche Weise erfolgen und ist durch die Erfindung nicht beschränkt, solange sie in zuverlässiger Weise die entsprechenden Informationen darstellt.

Die Projektionseinheit 3 ist vorzugsweise an der Beleuchtungsvorrichtung 2 in geeigneter Weise lösbar oder unlösbar mittels Schellen, Schrauben oder dergleichen befestigt. Es ist auch denkbar, dass die Projektionseinheit 3 als Einheit mit der Lichtquelle 21 der Beleuchtungsvorrichtung 2 oder im Austausch mit derselben in die Beleuchtungsvorrichtung 2 derart eingesetzt ist, dass eine Projektion in einer gewünschten Richtung ermöglicht wird. Figur 1 zeigt beispielhaft eine in die Beleuchtungsvorrichtung 2 neben einer Lichtquelle 21 derselben voll integrierte Projektionseinheit 3.

Eine Integration der Projektionseinheit 3 in die Leuchte bzw. Beleuchtungsvorrichtung 2 oder Lichtquelle 21 ist insbesondere aus platztechnischen Gründen und zur Verringerung oder Vermeidung eines Umrüstaufwandes einer bisher bestehenden Beleuchtungsvorrichtung 2 bevorzugt. Ist die Projektionseinheit 3 als Lasereinheit ausgebildet, so ergeben sich aufgrund der typischerweise deutlich kleiner ausgebildeten Lasereinheiten bzw- Laserprojektoren (im Vergleich zu herkömmlichen Projektoren) deutlich mehr Designmöglichkeiten als mit traditionellen Projektoren.

Die Richtung der Projektion ist vorzugsweise variabel ausgebildet bzw. einstellbar und durch die Einbaurichtung möglichst nicht oder nur bedingt vorgegeben bzw. begrenzt. Bei der Verwendung von Lasereinheiten (Laserprojektoren) als Projektionseinheit 3 kann dies vorteilhafterweise technisch z.B. durch Mikrospiegelarrays (wie bspw. beim "Digital Light Processing" umgesetzt) erreicht werden. Die Mikrospiegelarrays werden gleichzeitig benutzt, um das Bild zu erzeugen als auch die Projektionsrichtung zu bestimmen. Der aktuelle Stand der Technik erlaubt hierbei bis zu 120° Projektionswinkel und mehr. Darüber hinaus ist es zudem denkbar, dass insbesondere aufgrund der geringen Größe vorgenannter Projektionseinheiten 3 auch der Projektor selbst mit wenig Aufwand beweglich vorgesehen werden kann bzw. diesen beweglich auszuführen, so dass der gesamte Raumwinkel durch eine kombinierte Bewegung der Mikrospiegelarrays sowie des Projektors an sich abgedeckt werden kann.

Die Projektionseinheit 3 kann derart ausgelegt sein, dass sie unterschiedliche Signale 40, 50 auf mehrere Projektionsflächen 4, 5 projizieren kann, wie dies beispielhaft in Figur 1 dargestellt ist. Zusammenfassend kann die Projektionseinheit 3 vorzugsweise wenigstens ein Signal oder auch mehrere Signale 40, 50 auf eine oder mehrere Projektionsflächen 4, 5 (jeweils gemeinsam oder verteilt) projizieren, wo die als Lichtsignale übermittelten Signale dann als optisches Signal 40, 50 wiedergegeben werden. In Figur 1 projiziert die Projektionseinheit 3 beispielsweise zwei Signale 40, 50, eines auf eine Straßenoberfläche 4 und eines auf eine separate Projektionstafel 5. Die Erfindung ist selbstverständlich jedoch nicht auf dieses Ausführungsbeispiel beschränkt.

Die optischen Signale 40, 50 ermöglichen es, Informationen wie Warnhinweise, Verbotsschilder, Gebotsschilder oder dergleichen in optischer Weise darzustellen. Mit Hilfe der Projektionseinheit 3 können derartige Bilder auf den Straßenfahrbelag 4 bzw. allgemein auf einen Boden oder auf entsprechende Projektionsflächen 5 in der Nähe der Beleuchtungsvorrichtung 2 projiziert werden. Diese Projektionsflächen 4, 5 dienen dann als eine Art Blanko-Schilder, auf denen je nach Bedarf unterschiedliche Informationen dargestellt werden. Neben Warnhinweisen können auch alle anderen denkbaren Informationen auf die Projektionsflächen 4, 5 projiziert werden, wie beispielsweise Straßenwegweiser, Wetterhinweise, Informationen zu Messen oder sonstigen Veranstaltungen, Werbung im Allgemeinen und dergleichen. Mittels einer derart ausgebildeten Projektionseinheit 3 ist die Beleuchtungsvorrichtung 2 bzw. das System 1 in der Lage, (optische) Informationen jeglicher Art darzustellen und somit an Verkehrsteilnehmer zu übermitteln.

Um die Projektionseinheit 3 entsprechend aktueller Umstände oder Wünsche zu steuern, weist das System 1 ferner ein Kommunikationsmodul 6 auf, welches derart ausgelegt ist, die Projektionseinheit 3 auf Basis eingehender Eingangssignale zu steuern bzw. anzusteuern. Solche Eingangssignale können Datensignale sein, welche dem Kommunikationsmodul 6 via Powerline-Kommunikation ("power line communication"; PLC) beispielsweise von einer Verkehrsleitzentrale übermittelt werden. Auf diese Weise können den (aktuellen) Verkehrsbedingungen (bspw. hohes Verkehrsaufkommen, Stau, Unfall, schlechte Witterungsbedingungen, etc.) entsprechend Informationen und Signale auf vorgenannte Projektionsflächen 4, 5 projiziert werden, um beispielsweise den Verkehr optimal zu regeln oder auf Gefahren oder sonstige Informationen hinzuweisen.

Da Beleuchtungsvorrichtungen 2 in der Regel bereits Bestandteil eines gesteuerten Netzwerks (bspw. einer Verkehrsleitzentrale oder dergleichen) sind, bedarf es wenigstens für eine (Basis-)Ausführung des Systems 1 vorzugsweise keiner zusätzlichen Steuerungsinfrastruktur. Ferner wird es durch die Verwendung einer individuell ansteuerbaren Projektionseinheit 3 ermöglicht, alle denkbaren Informationen (direkt optisch; oder auch als Datensignale, wie im weiteren beschrieben) wiederzugeben, so dass das erfindungsgemäße System 1 nicht auf einen bestimmten Satz an Signalen beschränkt ist. Somit kann, ohne zusätzlichen Aufwand, auf neue und ggf. unvorhersehbare Umstände umgehend reagiert werden. Folglich wird mit dem erfindungsgemäßen System 1 auf einfache und kostengünstige Weise eine flexible situationsabhängige Lichtabgabe und Informationsausgabe ermöglicht.

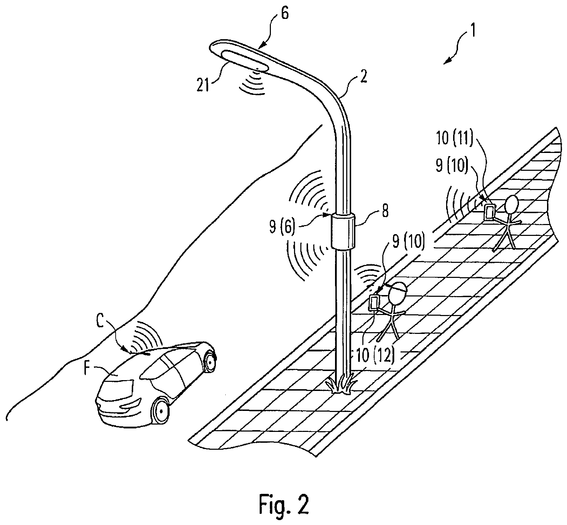

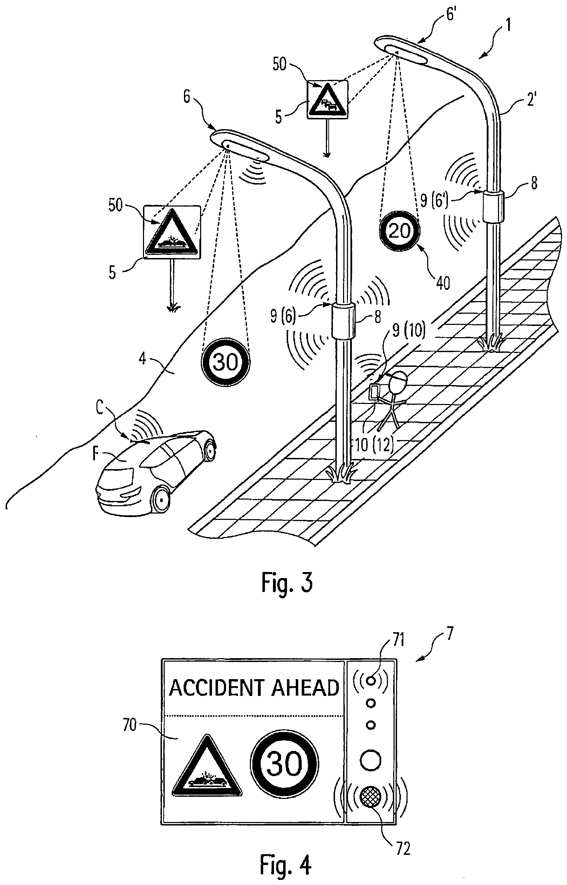

Die Eingangssignale können neben der Übermittlung via PLC auch Datensignale von einer beliebigen, vorzugsweise externen Sendeeinheit 10 (vgl. Figuren 2 und 3) oder von Sensoren sein, welche beispielsweise als Sensoreinheit 8 an der Beleuchtungsvorrichtung 1 vorgesehen oder in dem umliegenden Straßensystems vorgesehen oder integriert sind. Letztere Sensoren können beispielsweise entlang einer Straße in vorbestimmten, vorzugsweise gleichmäßigen Abständen vorgesehen sein und beispielsweise das Verkehrsaufkommen erfassen.

Die Sensoren können beispielsweise Lichtsensoren, Temperatursensoren, Bewegungssensoren, Rauchsensoren und dergleichen aufweisen. Das Kommunikationsmodul 6 ist dann vorzugsweise derart ausgebildet, dass es die Lichtquelle, insbesondere die Projektionseinheit 3 oder auch die Lichtquelle 21 der Beleuchtungsvorrichtung 2, auf Basis der mit dem Lichtsensor erfassten Lichtverhältnisse, auf Basis der mit dem Temperatursensor erfassten Temperatur, auf Basis von sich im Erfassungsbereich des Bewegungssensors befindlichen, vorzugsweise beweglichen Objekten und/oder auf Basis von einer mittels des Rauchsensors erfassten Rauchdichte bzw. einem Rauchaufkommen ansteuert. So kann beispielsweise bei Nebel die Projektionseinheit 3 derart angesteuert werden, dass sie eine Nebelwarnung und/oder eine Geschwindigkeitsbegrenzungsanzeige auf eine Projektionsfläche 4, 5 projiziert, während gleichzeitig das Licht der Lichtquelle 21 der Beleuchtungsvorrichtung 2 an die veränderten Witterungsbedingungen angepasst wird, also beispielsweise eingeschaltet oder verstärkt wird. Ebenso kann beispielsweise eine Stauwarnung mittels der Projektionseinheit 3 generiert werden, wenn die mittels Bewegungssensoren erfasste Anzahl an vorbeifahrenden Fahrzeugen F in einem vorgegebenen Zeitintervall einen vorgegebenen Schwellenwert überschreitet. Im Zusammenhang mit der Beschreibung der Figur 2 werden das Vorsehen und die Verwendung von Sensoren noch weitergehend erläutert.

Es ist ferner denkbar, dass die Eingangssignale Datensignale sind, welche von einem car-to-car Kommunikationsnetzwerk C übermittelt werden, wie dies beispielhaft in den Figuren dargestellt ist. Ein car-to-car Kommunikationsnetzwerk C ist grundsätzlich aus der Fahrzeugtechnologie bekannt und dient dazu, Informationen, insbesondere Warninformationen, unter Fahrzeugen F auszutauschen bzw. zwischen diesen zu übermitteln.

Die Integration des Systems 1 in ein car-to-car Kommunikationsnetzwerk C hat somit den Vorteil, dass beispielsweise die Ausgangsinformationen der Eingangssignale, welche die Beleuchtungsvorrichtung 1 veranlassen, Informationen bzw. Signale (z.B. Warnhinweise) optisch darzustellen, von einem Fahrzeug F selbst stammen können. Das System 1 ermöglicht es somit, sich in das bestehende car-to-car Kommunikationsnetzwerk C einzuklinken und die zwischen den Fahrzeugen F übermittelten Gefahrenmeldungen als Eingangssignale aufzugreifen und entsprechend in (optische oder Daten-)Signale umzusetzen. Beispielsweise kann ein verunfalltes Fahrzeug F, welches via car-to-car Kommunikationsnetzwerk C ein Warnsignal ausgibt, dieses gleichzeitig an die Beleuchtungsvorrichtung 1 senden, auf Basis dessen das Kommunikationsmodul 6 die Projektionseinheit 3 derart ansteuert, dass diese ein entsprechendes optisches Warnsignal generiert und auf eine umliegende Projektionsfläche 4, 5 projiziert. Somit können auch Passanten oder andere Verkehrsteilnehmer gewarnt werden, deren Fahrzeuge F beispielsweise keine car-to-car Kommunikationsvorrichtung C aufweisen.

Es ist umgekehrt auch denkbar, dass das Kommunikationsmodul 6 ferner dazu ausgelegt ist, um ausgehend von den eingehenden Eingangssignalen (bspw. von einer Verkehrsleitzentrale, Sensoren, einer Sendeeinheit 10, einem car-to-car Kommunikationsnetzwerk C oder dergleichen) Ausgangssignale zu generieren und diese an die Umgebung abzugeben. Die Ausgangssignale können dazu beispielsweise via PLC an eine Verkehrsleitzentrale übermittelt werden. Auch können die Ausgangssignale via Kurzstreckenfunk an umliegende Empfänger, beispielsweise innerhalb eines car-to-car Kommunikationsnetzwerkes C, übermittelt werden. Es ist auch denkbar, dass das System 1 als Relaisstation fungiert und die Ausgangsdaten an ein car-to-car Kommunikationsnetzwerk C oder auch ein anderes Kommunikationsmodul 6` (vgl. Figur 3) einer weiteren Beleuchtungsvorrichtung 2' des Systems 1 oder eine Verkehrsleitzentrale oder einen sonstigen Empfänger übermittelt. Wirkt das System 1 als Relaisstaion, so können auch Empfänger (Fahrzeugführer; Verkehrsleitzentrale; etc.) außerhalb eines begrenzten Abdeckungsbereichs - bspw. eines car-to-car Kommunikationsnetzwerkes C - erreicht und mit den entsprechenden Informationen versorgt werden. Wie im Weiteren noch erläutert wird, können die Ausgangssignale bei einem Empfänger, beispielsweise in einer Verkehrsleitzentrale oder in einem Fahrzeug F, in optische und/oder akustische Signale umgewandelt werden.

Übermittelt die Beleuchtungsvorrichtung 2 entsprechende Ausgangssignale als Relaisstation an Fahrzeuge F in der Umgebung, so können diese von den Fahrzeugen F bevorzugt im car-to-car Kommunikationsnetzwerk C empfangenen Ausgangssignale beispielsweise mittels einer Wiedergabeeinheit 7 optisch und/oder akustisch ausgegeben werden (vgl. Figur 4). Die Kommunikation zwischen der Beleuchtungsvorrichtung 2 und einem Fahrzeug F erfolgt dabei in gleicher Weise wie dies bei der car-to-car Kommunikation vorgesehen ist. Vorzugsweise kommt eine drahtlose Nahfeldkommunikation (Kurzstreckenfunk; Bluetooth) zum Einsatz.

Die Wiedergabeeinheit 7 kann ein Display 70 aufweisen, in dem optische Hinweise bildlich oder als Text wiedergegeben werden. Die optischen Hinweise können sich auch auf ein Lampenelement 71 beschränken - bspw. eine LED-Lampe - welche beispielsweise bei Erhalt eines Warnsignals von der Beleuchtungsvorrichtung 2 über das car-to-car Kommunikationsnetzwerk C blinkt und/oder in einer entsprechenden Farbe leuchtet. Ferner kann die Wiedergabeeinheit 7 eine akustische Wiedergabevorrichtung 72 wie einen Lautsprecher aufweisen, über den entsprechend dem erhaltenen Signal von der Beleuchtungsvorrichtung 1 Warntöne oder auch ein (vor-)generierter gesprochener Text wiedergegeben werden kann.

Das System 1 bzw. die Beleuchtungsvorrichtung 2 übermittelt somit nicht nur entsprechende Informationen in Form von Ausgangssignalen, sondern sie ist auch dazu vorgesehen, aus der Umgebung oder von einer Zentrale oder dergleichen eintreffende Eingangssignale zu empfangen und ggf. in Form einer Relaisstation weiterzuleiten. Es ist dabei auch denkbar, dass das Kommunikationsmodul 6 ferner einen Funksender aufweist, welcher mit anderen Kommunikationsmodulen 6` anderer Beleuchtungsvorrichtungen 2` des Systems 1 drahtlos verbunden ist, wie dies in Figur 3 beispielhaft dargestellt ist. Das Kommunikationsmodul 6 kann dann vorzugsweise derart ausgebildet sein, die Beleuchtungsvorrichtung 2 auf Basis der von den anderen Kommunikationsmodulen 6` der anderen Beleuchtungsvorrichtungen 2` übermittelten Daten zu steuern bzw. die Ansteuerung der Lichtquelle 21, 30 oder sonstiger Datenübermittlungsvorrichtungen Beleuchtungsvorrichtungs-übergreifend innerhalb des Systems 1 oder auch System-übergreifend abzustimmen. Eine derartige Kommunikation zwischen benachbarten Beleuchtungsvorrichtungen 2, 2` des Systems 1 oder auch verschiedener Systeme 1 untereinander ist dann wünschenswert und sinnvoll, wenn von einer bestimmten Beleuchtungsvorrichtung 2 ausgehend die Beleuchtungsvorrichtungen 2, 2` dann dazu veranlasst werden können, ihre Lichtabgabe und/oder die Ausgabe von Warninformationen oder Signalen entsprechend anzupassen. Denkbar wäre in diesem Zusammenhang, dass in der Umgebung einer Beleuchtungsvorrichtung 2' ein Unfall oder dergleichen festgestellt wird und dann die Beleuchtungsvorrichtung 2` mittels ihrer Kommunikationsmöglichkeiten die benachbarten Beleuchtungsvorrichtungen 2 veranlasst, ihre Lichtabgabe bzw. Informationsausgabe entsprechend anzupassen. In einem gewissen Abstand vor der Unfallstelle könnte dann eine Beleuchtungsvorrichtung 2, 2` gezielt dazu eingesetzt werden, Warnsignale zu übermitteln und/oder optisch anzuzeigen, wie dies in Figur 3 beispielhaft dargestellt ist.

Neben der Übertragung von Signalen (Eingangssignalen, Ausgangsignalen, etc.) mittels Funkkommunikation oder PLC ist es ferner denkbar, dass die zu übermittelnden Daten und Informationen alternativ oder ergänzend durch Modulation der Lichtquelle 21, 30 übermittelt werden. Mittels dieser sogenannten "Visible Light Communication" (VLC) als Datenübertragungstechnologie werden Daten oder Informationen mit Hilfe des Übertragungsmediums Licht übertragen, wobei die Frequenz des zur Übertragung genutzten Lichtes sich dabei in der Regel im sichtbaren Bereich zwischen 400 und 800 THz befindet. Hierzu können vorzugsweise die bereits vorhandenen Lichtquellen 21, 30 oder auch eine zusätzliche Lichtquelle verwendet werden.

Um die Eingangssignale auszuwerten und in entsprechende Ansteuersignale (oder Ausgangssignale) umzuwandeln, weist das Kommunikationsmodul 6 vorzugsweise eine Verarbeitungseinheit auf. Die Verarbeitungseinheit ist vorzugsweise Bestandteil des Kommunikationsmoduls 6 und somit ebenfalls vorzugsweise an oder mit der Beleuchtungsvorrichtung 2 (direkt) verbunden.

Die Abgabe der zuvor erwähnten Informationen oder Signale ist dabei nicht auf die optische Darstellung von Warninformationen oder dergleichen beschränkt. Wie bereits zuvor erwähnt, könnte eine sich in einem gewissen Abstand vor einer Unfallstelle befindliche Beleuchtungsvorrichtung 2 wiederum dazu veranlasst werden, drahtlose Informationen an weitere Verkehrsteilnehmer, insbesondere Fahrzeuge F, in Form einer Relaisstation oder dergleichen über ein car-to-car Kommunikationsnetzwerk C zu übermitteln. In den Fahrzeugen F kann dann, wie beispielsweise in Figur 4 dargestellt, auf einer entsprechenden Wiedergabeeinheit 7 mit Display 70, Lampenelementen 71 oder Lautsprechern 72 die Warninformation, z. B. ein Hinweis zum Reduzieren der Geschwindigkeit, optisch dargestellt oder akustisch wiedergegeben werden.

Zur drahtlosen Übermittlung der Informationen wird, wie zuvor bereits erwähnt, vorzugsweise Kurzstreckenfunk bereitgestellt und verwendet. Um den Energieverbrauch des Systems 1 dabei möglichst gering zu halten, hat sich insbesondere der Bluetooth-Standard 4.0 als vorteilhaft herausgestellt. Mittels des Bluetooth 4.0 Standards können eine Verbindung zwischen den verschiedenen Teilnehmern sehr schnell hergestellt und dementsprechend auch die Informationen nahezu unmittelbar bei dem Verkehrsteilnehmer empfangen und dargestellt werden. Die Erfindung ist jedoch nicht auf Bluethooth als Übermittlungsstandard beschränkt.

In Figur 2 ist ein zweites Ausführungsbeispiel des erfindungsgemäßen Systems 1 gezeigt. Gleiche Merkmale sind mit denselben Bezugszeichen versehen, so dass zur Vermeidung von Wiederholungen vollumfänglich auf die Ausführungen zum ersten Ausführungsbeispiel verwiesen wird. Die Merkmale der Ausführungsbeispiele können jeweils einzeln (vgl. Figuren 1 und 2) oder gemeinsam (vgl. Figur 3) auftreten.

Alternativ oder zusätzlich zu der im ersten Ausführungsbeispiel beschriebenen Projektionseinheit 3 weist das System 1 gemäß dem zweiten Ausführungsbeispiel eine Beleuchtungsvorrichtung 2 mit einer Lichtquelle 21 auf. Diese Lichtquelle 21 kann beispielsweise eine gewöhnliche Lichtquelle oder eine wie oben beschriebene Projektionseinheit 3 sein. Ferner ist eine Sensoreinheit 8 vorgesehen, welche wenigstens einen Sensor aufweist. Als Sensoren können alle denkbaren Sensoren eingesetzt werden, wie sie zuvor beispielhaft auch schon beschrieben wurden. Dabei kann es sich beispielsweise um Lichtsensoren, Temperatursensoren, Bewegungssensoren, Rauchsensoren und dergleichen handeln. Diese Sensoren können unterschiedliche Informationen zur Verfügung stellen, bspw. Informationen über das Außenlicht, das Verkehrsaufkommen und/oder die Temperatur und dergleichen. Im Hinblick auf das oben beschriebene erste Ausführungsbeispiel können diese mittels der Sensoren erfassten Informationen bspw. dazu genutzt werden, Informationen oder Signale darzustellen bzw. zu übermitteln oder die Beleuchtung der Lichtquelle 21 (30) bzw. der Projektionseinheit 3 anzupassen. Auch ist es denkbar, dass die Sensoreinheiten 8 derart ausgebildet sind, dass sie beispielsweise bei Funkverbindungsproblemen zwischen den Leuchtköpfen bzw. zwischen den Kommunikationsmodulen 6, 6` der Beleuchtungsvorrichtungen 2, 2` oder zwischen sonstigen Funkempfängern bzw. Funksendern und der Beleuchtungsvorrichtung 2, 2' Signale (Eingangssignale, Ausgangssignale, etc.) übermitteln, und so eine höhere Verfügbarkeit der Kommunikation vor allem bei technischen Defekten (z.B. Stromausfall in bestimmten Sektoren) sicherstellen.

Die Sensoreinheit 8 ist besonders bevorzugt außen an - und nicht in oder teilweise in - der Beleuchtungsvorrichtung 2 und vorzugsweise von der Lichtquelle 21, 30 beabstandet vorgesehen. Das System 1 gemäß dem zweiten Ausführungsbeispiel weist ebenso ein Kommunikationsmodul 6 zum Ansteuern der Lichtquelle 21, 30 auf, welches die Lichtquelle 21, 30 auf Basis der mittels des Sensors erfassten Daten ansteuert.

Um das Vorsehen der Sensoreinheit 8 einfach und kostengünstig zu ermöglichen und gleichzeitig ein System 1 mit einem hohen Maß an situationsabhängiger Lichtabgabe und Informationsausgabe bereitzustellen, wird erfindungsgemäß auf das Vorsehen einer Bohrung in der Beleuchtungsvorrichtung 2, genauer deren Mast 20, und den elektrischen Anschluss über die Bohrung und an der elektrischen Ausrüstung der Beleuchtungsvorrichtung 2 verzichtet. Vielmehr wird eine drahtlose Datenkommunikationseinheit 9 bereitgestellt, mittels der die Sensoreinheit 8 nur drahtlos (also eben nicht via Kabel) mit einem Empfänger des Kommunikationsmoduls 6 verbunden ist. Hierzu wird der Sensor bzw. die Sensoreinheit 8 vorzugswiese nur an der Außenseite der Beleuchtungsvorrichtung, besonders vorzugsweise an der Außenseite des die Beleuchtungsvorrichtung 2 aufweisenden Mastes 20 vorgesehen bzw. montiert, aber nicht elektrisch angeschlossen. Es ist somit möglich, die Sensoren in einer dafür geeigneten optimalen Höhe anzuordnen, ohne einen großen Aufwand bei der Anbringung zu betreiben, da der Sensor nicht elektrisch mit entsprechenden Leitungen, die im Inneren des Masts verlaufen, verbunden werden muss.

Die drahtlose Verbindung der Datenkommunikationseinheit 9 wird vorzugsweise mittels Kurzstreckenfunk bereitgestellt, besonders vorzugsweise mittels Bluetooth, insbesondere bevorzugt mittels Bluetooth 4.0. Zu den Vorteilen des Bluetooth Standards, insbesondere dessen niedriger Energiebedarf, wird auf obige Ausführungen verwiesen.

Um dennoch die Sensoreinheit 8 autark betreiben zu können, weist diese vorzugsweise eine eigenständige Energiequelle auf. Diese Energiequelle kann beispielsweise ein Solarmodul, vorzugsweise mit Energie-Zwischenspeicher, oder ein interner Energiespeicher, wie beispielsweise einen Akkumulator oder dergleichen sein.

Der Sensor ist somit in der Lage, entsprechende Informationen über die Umgebung zu erfassen und ggf. in der Sensoreinheit 8 zu sammeln. Ist es erforderlich, dass aufgrund der entsprechenden äußeren Situation die Funktion der Lichtquelle 21 oder gar einer Projektionseinheit 3 angepasst werden muss (bspw. entsprechende Anpassungen der Beleuchtung der Lichtquelle 21 oder Ausgabe von Warninformationen mittels Projektionseinheit 3 (optisch) oder via Kommunikationsmodul 6 (PLC; Relaisstation; etc.)), so werden entsprechende Signale drahtlos von dem Sensor bzw. der Sensoreinheit 8 an die Beleuchtungsvorrichtung 2 übermittelt. Wie zuvor bereits beschrieben, erfolgt hierbei eine Kommunikation über das Kommunikationsmodul 6 mit einer vorzugsweise extrem niedrigen Leistung, wobei bspw. der Einsatz des Bluetooth-Standards denkbar ist. In diesem Fall ist eine Kommunikation über eine verhältnismäßig kurze Reichweite möglich, welche allerdings ausreichend ist, um den Abstand zwischen Sensor und Empfänger des Kommunikationsmoduls 6 zu überbrücken. Da in der Regel der Sensor auch nicht permanent entsprechende Signale an die Beleuchtungsvorrichtung 2 übermittelt, sondern nur im Bedarfsfall einmalig derartige Informationen sendet, reicht die Energie eines vorgenannten Energiespeichers für derartige Maßnahmen in der Regel für einen langen Zeitraum aus, so dass auch eventuelle Wartungsintervalle vergrößert und somit wiederum Kosten eingespart werden können.

Das Kommunikationsmodul 6 weist eine Verarbeitungseinheit auf, in der die Eingangssignale, insbesondere die von dem Sensor erfassten bzw. von der Sendeeinheit 10 übermittelten Daten, ausgewertet und in Ansteuersignale oder allgemein Ausgangssignale umgewandelt werden. Die Verarbeitungseinheit ist Bestandteil des Kommunikationsmoduls 6 und kann entweder mit der Sensoreinheit 8 oder der Beleuchtungsvorrichtung 2 direkt verbunden sein. Ein Datensender des Kommunikationsmoduls 6 sowie der Empfänger des Kommunikationsmoduls 6 stellen vorzugsweise die drahtlose Verbindung zwischen der Sensoreinheit 8 und dem Empfänger des Kommunikationsmoduls 6 bereit. Ist die Verarbeitungseinheit in der Sensoreinheit 8 vorgesehen, so werden mittels des Datensenders die bereits generierten Ansteuersignale an den Empfänger der Kommunikationmodul 6 übermittelt. Ist umgekehrt die Verarbeitungseinheit in der Beleuchtungsvorrichtung 2, vorzugsweise nahe oder an der Lichtquelle 21, vorgesehen, so werden mittels des Datensenders lediglich die von dem Sensor ermittelten Daten an den in der Beleuchtungsvorrichtung 2 (vorzugsweise nahe oder an der Lichtquelle 21) vorgesehenen Empfänger der Kommunikationsmodul 6 übermittelt und dort der Verarbeitungseinheit zum Generieren und Übermitteln von Ansteuersignalen bereitgestellt.

Wie im ersten Ausführungsbeispiel, so kann das Kommunikationsmodul 6 gemäß dem zweiten Ausführungsbeispiel ebenfalls ferner einen Funksender aufweisen, welcher mit anderen Kommunikationsmodulen 6, 6` anderer Beleuchtungsvorrichtungen 2, 2` des Systems 1 drahtlos verbunden ist, wie dies beispielhaft in Figur 3 gezeigt ist. Das Kommunikationsmodul 6 ist dann ferner derart ausgebildet, die Beleuchtungsvorrichtung 2 auf Basis der von den anderen Kommunikationsmodulen 6` der anderen Beleuchtungsvorrichtungen 2` übermittelten Daten zu steuern bzw. die Steuerung in Abhängigkeit der zwischen den Beleuchtungsvorrichtungen 2, 2` ausgetauschten Daten entsprechend zu generieren. Wie zuvor bereits beschrieben, kann eine zusätzliche Sicherheits-Verbindung zwischen den Beleuchtungsvorrichtungen 2, 2` mittels der Sensoreinheiten 8 bereitgestellt werden, die beispielsweise bei Stromausfall eine Übertragung der Signale übernimmt und somit eine Kommunikation auch bei entsprechenden Problemen sicherstellt.

Es ist überdies denkbar, dass das Kommunikationsmodul 6 derart ausgebildet ist, dass die Lichtquelle 21 (oder auch eine Projektionseinheit 3 gemäß dem ersten Ausführungsbeispiel) ferner auf Basis von drahtlos an die Kommunikationseinheit 6 übermittelten Daten eines vorzugswiese externen Sendemoduls, wie bspw. der zuvor beschriebenen Sendeeinheit 10, ansteuerbar ist. Ein solches Sendemodul 10 kann beispielsweise eine Mobiltelefon 11 oder eine andere, vorzugswiese speziell konfigurierte Sendeeinheit 12 sein. Die Beleuchtungsvorrichtung 2 kann dann derart ausgebildet sein, dass sie (zusätzlich) auf extern (also nicht von dem Sensor) zugeführte Signale reagiert und bspw. ihre Beleuchtung oder die Informationsausgabe im Allgemeinen entsprechend anpasst. Beispielsweise kann (wiederum vorzugsweise über Bluetooth) die Annäherung einer Person, welche ein Smartphone 11 als Sendemodul 10 aufweist, erkannt werden. Die Beleuchtungsvorrichtung 2 kann dann dementsprechend ihre Lichtabgabe anpassen. Auf diese Weise ersetzt die direkte Kommunikation zwischen dem Verkehrsteilnehmer (mit Mobiltelefon 11) und der Beleuchtungsvorrichtung 2 zumindest zum Teil den Sensor bzw. die Sensoreinheit 8.

Wie zuvor bereits erwähnt, kann gemäß einem bevorzugten Anwendungsgebiet auch gemäß dem zweiten Ausführungsbeispiel eine Kommunikation zwischen Beleuchtungsvorrichtungen 2, 2` eines Systems 1 untereinander stattfinden und ermöglicht somit beispielsweise das sogenannte fortlaufende Licht. Das heißt, mit einem sich bewegenden Verkehrsteilnehmer (aufweisend eine Sendemoduls 10) wird die Beleuchtung entsprechend angepasst, wobei im unmittelbaren Bereich des Teilnehmers die höchste Helligkeit erzielt wird, während hingegen in weiterer Entfernung bereits eine entsprechende Anpassung stattfindet. Das wiederum bedeutet, dass Beleuchtungsvorrichtungen 2, auf die sich der Verkehrsteilnehmer zu bewegt, dazu veranlasst werden können, ihre Helligkeit langsam zu erhöhen, andere, von denen sich der Verkehrsteilnehmer entfernt, können hingegen veranlasst werden, ihre Helligkeit langsam zu verringern.

Mittels des Sendemoduls 10 oder eines anderen, vorzugsweise externen Senders (bspw. eine Verkehrsleitzentrale und dergleichen) ist es ferner vorzugsweise möglich, das Kommunikationsmodul 6 und folglich die Beleuchtungsvorrichtung 2 mittels drahtlos oder drahtgebunden an das Kommunikationsmodul 6 übermittelter Daten zu parametrieren. Hierunter wird verstanden, die Funktionsweise der Beleuchtungsvorrichtung 2, insbesondere der Lichtquelle 21 oder der Projektionseinheit 3, individuell an den jeweiligen Einsatzort und eventuell vorliegende Bedingungen flexibel anzupassen. Beispielsweise kann das Verhalten der Beleuchtungsvorrichtung 2 in Abhängigkeit von der Tageszeit konfiguriert werden. Es kann auch vorgegeben werden, in welcher Weise die Beleuchtungsvorrichtung 2 auf die von dem Sensor zur Verfügung gestellten Signale reagiert. In diesem Zusammenhang ist zu berücksichtigen, dass der Sensor bspw. einen größeren Bereich erfassen kann, als eigentlich für die Funktion der Beleuchtungsvorrichtung 2 gewünscht ist. Soll bspw. die Lichtquelle 21 ihre Helligkeit abhängig von der Anwesenheit von Fußgängern oder dergleichen anpassen, so ist gewünscht, dass die Beleuchtungsvorrichtung 2 auf Sensorsignale reagiert, die bspw. von auf dem Gehweg sich bewegenden Personen stammen. Allerdings kann nicht ausgeschlossen werden, dass der Sensor aufgrund seines Erfassungsbereichs auch auf Fahrzeuge auf der Straße und dergleichen reagiert. Durch entsprechende Informationen, die dann bspw. von einem Smartphone oder einem anderen Gerät zum Parametrieren der Beleuchtungsvorrichtung 2 bzw. des Kommunikationsmoduls 6 zur Verfügung gestellt werden, kann die vorzugsweise in der Beleuchtungsvorrichtung 2 angesiedelte Intelligenz derart eingestellt werden, dass lediglich diejenigen Sensorsignale berücksichtigt werden, die sich tatsächlich auf den Fußgängerbereich oder dergleichen beziehen. Das heißt, es kann in einfacher und komfortabler Weise, insbesondere drahtlos, die Funktionalität der Beleuchtungsvorrichtung 2 vor Ort eingestellt und auch zu einem späteren Zeitpunkt jederzeit angepasst werden.

Auch auf andere extern ermittelte Informationen kann die Beleuchtungsvorrichtung 2 vorzugsweise gezielt reagieren. Das Kommunikationsmodul 6 kann hierzu ferner vorzugsweise derart ausgebildet sein, dass es eine Ansteuerung der Lichtquelle 21, 30 oder auch die Parametrierung des Kommunikationsmoduls 6 in Abhängigkeit von einer Berechtigung des die entsprechenden Daten übermittelnden Senders, wie dem externen Sendemodul 10, ausführt oder nicht auszuführt. Es wird also vorzugsweise unterschieden zwischen Signalen, die von jedermann übermittelt werden können, und Signalen, die gezielt nur durch berechtigte Personen oder dergleichen übermittelt werden können. Das einfache Anpassen der Helligkeit wäre bspw. durch jedermann zulässig, während hingegen spezielle Dienste wie Polizei, Feuerwehr oder Rettungsdienste befähigt wären, eine Lichtquelle 21, 30 gezielt zu veranlassen, im Falle eines Umfalls den Umgebungsbereich sehr hell auszuleuchten oder die Beleuchtungsvorrichtung 2 bzw. eine Projektionseinheit 3 zur Ausgabe von Warnsignalen zu veranlassen. Selbstverständlich sollten derartige Funktionen nicht durch jedermann ausgelöst werden können, weshalb hier vorzugsweise eine Unterscheidung getroffen werden sollte.

Das Sendemodul bzw. die Sendeeinheit 10 ist somit vorzugsweise in gleicher Weise einsetzbar wie die Sensoreinheit 8. Die von der Sendeeinheit 10 übermittelten Daten können in der Kommunikationseinheit 6 in Form der vorbeschriebenen Eingangssignale zur Verfügung gestellt werden, wobei solche Daten automatisch von der Sendeeinheit 10 übermittelt oder individuell generiert und dann gezielt übermittelt werden. Auch kann die Sendeeinheit 10 vorzugsweise die von dem Kommunikationsmodul 6 bzw. der Beleuchtungsvorrichtung 2 ausgegebenen Ausgangssignale empfangen und beispielsweise in optischen und/oder akustische Signale umwandeln, die dies bei der in Figur 4 dargestellten Wiedergabeeinheit 7 der Fall ist. Die Wiedergabeeinheit 7 kann dann beispielsweise die Sendeeinheit 10 (insbesondere ein Smartphone oder eine spezielle Wiedergabevorrichtung) sein, welche vorzugsweise eine Display 70, einen Audioausgang oder Lautsprecher 71 und dergleichen aufweist.

Es sei angemerkt, dass gemäß dem zweiten Ausführungsbeispiel die Sendeeinheit 10 folglich auch anstelle der Sensoreinheit 8 vorgesehen sein kann und nicht nur in Kombination mit derselben auftritt. Das System 1 umfasst dann vorzugsweise die Beleuchtungsvorrichtung 2 mit einer Lichtquelle 21, 30, die Sendeeinheit 10 (bspw. ein Mobiltelefon 11) aufweisend einen Sender, wobei die Sendeeinheit 10 von der Lichtquelle 21, 30 beabstandet ist, das Kommunikationsmodul 6 zum Ansteuern der Lichtquelle 21, 30 auf Basis von mittels der Sendeeinheit 10 übermittelten Daten, und die drahtlose Datenkommunikationseinheit 9, mittels der die Sendeeinheit 10 nur drahtlos mit dem Empfänger des Kommunikationsmoduls 6 verbunden ist. Die Sendeeinheit 10 weist zur autarken Energieversorgung ferner vorzugsweise eine eigenständige Energiequelle auf, beispielsweise ein Akkumulator.

Im Folgenden wird ein Verfahren zur Ausgabe von Signalen bzw. Informationen mittels des erfindungsgemäßen Systems 1 beschrieben:
Zunächst werden Daten an die Beleuchtungsvorrichtung 2 des Systems 1 übermittelt. Diese Daten werden als Eingangssignale an das Kommunikationsmodul 6 gesendet und schließlich anderen Empfängern bereitgestellt. Hierzu weist das Kommunikationsmodul 6 vorzugsweise eine Verarbeitungseinheit auf, in der die Eingangssignale ausgewertet und in Ansteuersignale oder Ausgangssignale umgewandelt werden. Die Eingangssignale können via PLC oder drahtlos (bspw- Kurzstreckenfunk; Bluetooth) an die Kommunikationseinheit übermittelt werden; bspw. von einer Verkehrsleitzentrale, einer an der Beleuchtungsvorrichtung 2 vorgesehenen Sensoreinheit 8, einer (externen) Sendeeinheit 10, 11, 12, einem car-to-car Kommunikationsnetzwerk C oder einem sonstigen Sender. Diese Eingangssignale können entweder zur Ausgabe von Informationen oder zum Parametrieren des Systems 1 vorgesehen sein. Die Ansteuersignale können entweder zum Ansteuern der Lichtquelle 21 vorgesehen sein (bspw. zum Ein- oder Ausschalten bzw. Einstellen der Leuchtstärke) oder zum Ansteuern einer Projektionseinheit 3, welche gemäß der Ansteuersignale vorzugsweise optische Signale 40, 50 auf eine Projektionsfläche 4, 5 projiziert. Die Ausgangssignale können via PLC oder auch drahtlos (Kurzstreckenfunk; Relaisstation) übermittelt werden und in einer Verkehrsleitzentrale, einem car-to-car Kommunikationsnetzwerk C oder auf sonstigen Empfängern (bspw. Sendeeinheit 10; Smartphone 11; etc.) beispielsweise in optischer und/oder akustischer Form bereitgestellt werden. Auch können die Ausgangssignale an (benachbarte) Beleuchtungsvorrichtungen 2` desselben oder eines anderen Systems 1 übermittelt und dort als Eingangssignale bereitgestellt werden, welche vorzugsweise nach einem Abgleich mit anderen Eingangssignalen zu einer kombinierten Ansteuerung mehrerer Beleuchtungsvorrichtungen 2, 2` bzw. gezielten Abgabe von Ausgangssignalen führt.

Gemäß bevorzugter Ausführungsformen können die Verfahren zur Abgabe von Signalen 40, 50 mittels des Straßen- und Wegbeleuchtungssystems 1 wie folgt ablaufen:
Das Straßen- und Wegbeleuchtungssystems 1 weist die Beleuchtungsvorrichtung 2, 2' mit der Projektionseinheit 3 aufweisend eine Lichtquelle 21, 30 und das Kommunikationsmodul 6, 6` auf. In einem ersten Schritt werden drahtlos oder drahtgebunden übermittelte Eingangssignale im Kommunikationsmodul 6, 6` empfangen. In einem weiteren Schritt wird die Projektionseinheit 3 mittels des Kommunikationsmoduls 6, 6` auf Basis der Eingangssignale angesteuert. Sodann werden die auszugebenden Signalen 40, 50 auf eine Projektionsfläche 4, 5 mittels der Projektionseinheit 3 projiziert.

Gemäß einer anderen Ausführungsform weist das Straßen- und Wegbeleuchtungssystem 1 die Beleuchtungsvorrichtung 2, 2` mit einer Lichtquelle 21, 30 sowie die Sensoreinheit 8 aufweisend einen Sensor und/oder die Sendeeinheit 10, 11, 12, 8 aufweisend einen Sender auf, wobei die Sensoreinheit 8 oder die Sendeeinheit 10, 11, 12, 8 vorzugsweise an der Beleuchtungsvorrichtung 2, 2` und von der Lichtquelle 21, 30 beabstandet vorgesehen sind und vorzugsweise eine eigenständige Energiequelle aufweisen. Des Weiteren weist das System 1, ein Kommunikationsmodul 6, 6` und eine drahtlose Datenkommunikationseinheit 9 auf. In einem ersten Schritt werden mittels des Sensors erfasste Daten oder mittels der Sendeeinheit 10, 11, 12, 8 übermittelten Daten als Eingangssignalen an einen Empfänger des Kommunikationsmoduls 6, 6` mittels der Datenkommunikationseinheit 9 ausschließlich drahtlos gesendet bzw. übermittelt. Diese drahtlos übermittelten Eingangssignale werden im Kommunikationsmodul 6, 6` empfangen. In einem weiteren Schritt wird die Lichtquelle 21, 30 dann mittels des Kommunikationsmoduls 6, 6` und auf Basis der mittels der Eingangssignale übermittelten Daten angesteuert.

Die Lichtquelle 21, 30 kann in den vorgenannten Ausführungsbeispielen jeweils wenigstens auch eine Projektionseinheit 3 sein bzw. die Projektionseinheit 3 eine entsprechende Lichtquelle 21, 30 (bspw. eine Laserlichtquelle) aufweisen. Diese kann ein oder mehrere Signale 40, 50 auf eine oder mehrere Projektionsflächen 4, 5 projizieren, wobei die Signale 40, 50 vorzugsweise optische Signale 40, 50 auf der wenigstens einen Projektionsfläche 4, 5 bilden.

Die vorgenannten Ausführungsbeispiele der Verfahren können ferner die Schritte aufweisen, dass Ausgangssignalen durch das Kommunikationsmodul 6, 6` und ausgehend von den eingegangenen Eingangssignalen generiert werden, welche dann an die Umgebung, beispielsweise via Powerline-Kommunikation, Kurzstreckenfunk oder als Relaisstation abgegeben werden, vorzugsweise an eine Verkehrsleitzentrale oder ein car-to-car Kommunikationsnetzwerk C oder ein anderes Kommunikationsmodul 6', 6 einer weiteren Beleuchtungsvorrichtung 2', 2 des Systems 1.

Die Eingangssignale werden dem Kommunikationsmodul 6, 6` vorzugsweise als Datensignale via Powerline-Kommunikation oder von Sensoren, beispielsweise einer Sensoreinheit 8 des Systems 1 oder eines umliegenden Straßensystems, oder von einem car-to-car Kommunikationsnetzwerk C oder einer sonstigen, vorzugsweise externen Sendeeinheit 10, 11, 12, 8 übermittelt.

Ausgehend von den zuvor beschriebenen Verfahren ist es in einem weiteren Schritt ferner möglich, die Beleuchtungsvorrichtung 2, 2', vorzugsweise das Kommunikationsmodul 6, 6', mittels drahtlos oder drahtgebunden an das Kommunikationsmodul 6, 6` übermittelter Daten zu parametrieren. Die Parametrierung des Kommunikationsmoduls 6, 6` kann besonders bevorzugt in Abhängigkeit von einer Berechtigung des die Daten übermittelnden Senders, wie dem externen Sendemodul 10, 11, 12, 8, ausgeführt oder nicht ausgeführt werden

## Patentansprüche

1. Straßen- und Wegbeleuchtungssystem (1) aufweisend:
eine Beleuchtungsvorrichtung (2, 2') mit einer Lichtquelle (21), einer Projektionseinheit (3) zum Projizieren von Signalen auf eine Projektionsfläche (4, 5), und einem Kommunikationsmodul (6, 6'), welches derart ausgebildet ist, die Projektionseinheit (3) auf Basis eingehender Eingangssignale zu steuern,
wobei die Projektionseinheit (3) eine weitere Lichtquelle (30) aufweist,
wobei die Eingangssignale Datensignale sind,
wobei das Kommunikationsmodul (6, 6') derart ausgebildet ist, die Lichtquelle (21) der Beleuchtungsvorrichtung (2, 2') und die Projektionseinheit (3) auf Basis der Eingangssignale anzusteuern,
wobei die Signale Lichtsignale sind, welche auf der Projektionsfläche (4, 5) Informationen als Bilder darstellen.

2. Straßen- und Wegbeleuchtungssystem (1) nach Anspruch 1, wobei die weitere Lichtquelle (30) eine Lasereinheit oder eine LED-Leuchte ist.

3. Straßen- und Wegbeleuchtungssystem (1) nach einem der vorhergehenden Ansprüche, wobei die Projektionseinheit (3) ausgelegt ist, um die Signale auf mehrere Projektionsflächen (4, 5) zu projizieren.

4. Straßen- und Wegbeleuchtungssystem (1) nach einem der vorhergehenden Ansprüche, wobei das Kommunikationsmodul (6, 6') ferner ausgelegt ist, um ausgehend von den eingehenden Eingangssignalen Ausgangssignale zu generieren und an eine Verkehrsleitzentrale oder ein car-to-car Kommunikationsnetzwerk (C) oder ein anderes Kommunikationsmodul (6', 6) einer weiteren Beleuchtungsvorrichtung (2', 2) des Systems (1), beispielsweise via Powerline-Kommunikation, Kurzstreckenfunk oder als Relaisstation, abzugeben.

5. Straßen- und Wegbeleuchtungssystem (1) nach einem der vorhergehenden Ansprüche, wobei die Eingangssignale Datensignale sind, welche dem Kommunikationsmodul (6, 6') von wenigstens einem Sensoren, beispielsweise einer Sensoreinheit (8) des Systems (1) übermittelt werden können,
wobei das Kommunikationsmodul (6, 6') vorzugsweise derart ausgebildet ist, die Lichtquelle (21) der Beleuchtungsvorrichtung (2, 2') und die Projektionseinheit (3) auf Basis der mittels des wenigstens einen Sensors erfassten Daten anzusteuern,
wobei ferner vorzugsweise eine drahtlose Datenkommunikationseinheit (9) vorgesehen ist, mittels der die den wenigstens einen Sensor aufweisende Sensoreinheit (8) nur drahtlos mit einem Empfänger des Kommunikationsmoduls (6, 6') verbunden ist,
wobei die Sensoreinheit (8) vorzugsweise eine eigenständige Energiequelle aufweist,
wobei der wenigstens eine Sensor vorzugsweise Lichtsensoren, Temperatursensoren, Bewegungssensoren oder Rauchsensoren aufweist, und wobei das Kommunikationsmodul (6, 6') vorzugsweise derart ausgebildet ist, dass es die Lichtquelle (21, 30) auf Basis der mit dem Lichtsensor erfassten Lichtverhältnisse, auf Basis der mit dem Temperatursensor erfassten Temperatur, auf Basis von sich im Erfassungsbereich des Bewegungssensors befindlichen, vorzugsweise beweglichen Objekten und/oder auf Basis von mittels des Rauchsensors erfassten Rauchvorkommens oder Rauchdichte ansteuert,
wobei der wenigstens eine Sensor bzw. die Sensoreinheit (8) vorzugsweise an der Außenseite der Beleuchtungsvorrichtung (2, 2') vorgesehen ist, besonders vorzugsweise an der Außenseite eines die Beleuchtungsvorrichtung (2, 2') aufweisenden Mastes (20), an dessen oberen Ende vorzugsweise die Lichtquelle (21, 30) angeordnet ist,
wobei die drahtlose Verbindung vorzugsweise mittels Kurzstreckenfunk bereitgestellt wird, vorzugsweise mittels Bluetooth, besonders vorzugsweise Bluetooth 4.0, und
wobei die eigenständige Energiequelle vorzugsweise ein Solarmodul, besonders vorzugsweise mit Energie-Zwischenspeicher, oder ein interner Energiespeicher ist.

6. Straßen- und Wegbeleuchtungssystem (1) nach einem der vorhergehenden Ansprüche, wobei das Kommunikationsmodul (6, 6') derart ausgebildet ist, dass die Lichtquelle (21, 30) ferner auf Basis von drahtlos an die Kommunikationseinheit (6, 6') übermittelten Daten eines externen Sendemoduls ansteuerbar ist.

7. Straßen- und Wegbeleuchtungssystem (1) nach einem der vorhergehenden Ansprüche, wobei die Beleuchtungsvorrichtung (2, 2'), vorzugsweise das Kommunikationsmodul (6, 6'), mittels drahtlos oder drahtgebunden an das Kommunikationsmodul (6, 6') übermittelter Daten parametriert werden kann.

8. Straßen- und Wegbeleuchtungssystem (1) nach Anspruch 6 oder 7, wobei das Kommunikationsmodul (6, 6') derart ausgebildet ist, eine Ansteuerung der Lichtquelle (21, 30) oder Parametrierung des Kommunikationsmoduls (6, 6') abhängig von einer Berechtigung des die Daten übermittelnden Senders, wie dem externen Sendemodul (10, 11, 12, 8), auszuführen oder nicht auszuführen.

9. Straßen- und Wegbeleuchtungssystem (1) nach einem der vorhergehenden Ansprüche, wobei das Kommunikationsmodul (6, 6') ferner einen Funksender aufweist, welcher mit anderen Kommunikationsmodulen (6', 6) anderer Beleuchtungsvorrichtungen (2', 2) des Systems (1) drahtlos verbunden ist, wobei das Kommunikationsmodul (6, 6') ferner derart ausgebildet ist, die Beleuchtungsvorrichtung (2, 2') auf Basis der von den anderen Kommunikationsmodulen (6', 6) der anderen Beleuchtungsvorrichtungen (2', 2) übermittelten Daten zu steuern.

10. Straßen- und Wegbeleuchtungssystem (1) nach einem der Ansprüche 5 bis 9, wobei das Kommunikationsmodul (6, 6') eine Verarbeitungseinheit aufweist, in der die Eingangssignale, insbesondere die von dem wenigstens einen Sensor erfassten übermittelten Daten, ausgewertet und in Ansteuersignale umgewandelt werden,
wobei vorzugsweise ein Datensender des Kommunikationsmoduls (6, 6'), vorzugsweise in der Sensoreinheit (8), sowie der Empfänger des Kommunikationsmoduls (6, 6'), vorzugsweise in der Beleuchtungsvorrichtung (2, 2'), besonders vorzugsweise an der Lichtquelle (21, 30), die drahtlose Verbindung zwischen Sensoreinheit (8) und Empfänger des Kommunikationsmoduls (6, 6') bereitstellen.

11. Verfahren zur Ausgabe von Signalen mittels eines Straßen- und Wegbeleuchtungssystems (1) aufweisend eine Beleuchtungsvorrichtung (2, 2') mit einer Lichtquelle (21), einer Projektionseinheit (3) aufweisend eine weitere Lichtquelle (30) und einem Kommunikationsmodul (6, 6'), wobei das Verfahren die folgenden Schritte aufweist:
- Empfang von drahtlos oder drahtgebunden übermittelten Eingangssignalen im Kommunikationsmodul (6, 6'),
- Ansteuern der Projektionseinheit (3) mittels des Kommunikationsmoduls (6, 6') auf Basis der Eingangssignale, und
- Projizieren von Signalen auf eine Projektionsfläche (4, 5) mittels der Projektionseinheit (3), wobei die Signale Lichtsignale sind, welche auf der Projektionsfläche (4, 5) Informationen als Bilder darstellen,
ferner aufweisend eine Sensoreinheit (8) aufweisend einen Sensor, und eine drahtlose Datenkommunikationseinheit (9), wobei das Verfahren ferner die folgenden Schritte aufweist:
- Drahtloses Senden von mittels des Sensors erfassten Daten als Eingangssignalen an einen Empfänger des Kommunikationsmoduls (6, 6') mittels der Datenkommunikationseinheit (9),
- Empfang der drahtlos übermittelten Eingangssignale im Kommunikationsmodul (6, 6'), und
- Ansteuern der Lichtquellen (21, 30) mittels des Kommunikationsmoduls (6, 6') auf Basis der übermittelten Daten.

12. Verfahren nach Anspruch 11, wobei die Sensoreinheit (8) an der Beleuchtungsvorrichtung (2, 2') und von der Lichtquelle (21, 30) beabstandet vorgesehen ist und vorzugsweise eine eigenständige Energiequelle aufweist.

13. Verfahren nach einem der Ansprüche 11 oder 12, ferner aufweisend die Schritte:
- Generieren von Ausgangssignalen durch das Kommunikationsmodul (6, 6') ausgehend von den eingegangenen Eingangssignalen, und
- Abgabe der Ausgangssignale an die Umgebung, beispielsweise via Powerline-Kommunikation, Kurzstreckenfunk oder als Relaisstation, vorzugsweise an eine Verkehrsleitzentrale oder ein car-to-car Kommunikationsnetzwerk (C) oder ein anderes Kommunikationsmodul (6', 6) einer weiteren Beleuchtungsvorrichtung (2', 2) des Systems (1).

14. Verfahren nach einem der Ansprüche 11 bis 13, ferner aufweisend den Schritt:
- Parametrieren der Beleuchtungsvorrichtung (2, 2'), vorzugsweise des Kommunikationsmoduls (6, 6'), mittels drahtlos oder drahtgebunden an das Kommunikationsmodul (6, 6') übermittelter Daten,
wobei die Parametrierung des Kommunikationsmoduls (6, 6') abhängig von einer Berechtigung des die Daten übermittelnden Senders, wie dem externen Sendemodul (10, 11, 12, 8), ausgeführt oder nicht ausgeführt wird.

## Claims

1. Road and path lighting system (1) comprising:
a lighting device (2, 2') having a light source (21), a projection unit (3) for projecting signals onto a projection surface (4, 5), and a communication module (6, 6') which is designed to control the projection unit (3) on the basis of incoming input signals,
wherein the projection unit (3) comprises a further light source (30),
wherein the input signals are data signals,
wherein the communication module (6, 6') is designed to actuate the light source (21) of the lighting device (2, 2') and the projection unit (3) on the basis of the input signals,
wherein the signals are light signals which display information on the projection surface (4, 5) as images.

2. Road and path lighting system (1) according to claim 1, wherein the further light source (30) is a laser unit or an LED light.

3. Road and path lighting system (1) according to either of the preceding claims, wherein the projection unit (3) is designed to project the signals onto a plurality of projection surfaces (4, 5).

4. Road and path lighting system (1) according to any of the preceding claims, wherein the communication module (6, 6') is further designed to generate output signals on the basis of the incoming input signals, and to output said output signals to a traffic control center or a car-to-car communication network (C) or another communication module (6', 6) of a further lighting device (2', 2) of the system (1), for example via power line communication, short-range radio or as a relay station.

5. Road and path lighting system (1) according to any of the preceding claims, wherein the input signals are data signals which can be transmitted to the communication module (6, 6') of at least one sensor, for example a sensor unit (8) of the system (1),
wherein the communication module (6, 6') is preferably designed to actuate the light source (21) of the lighting device (2, 2') and the projection unit (3) on the basis of the data detected by means of the at least one sensor,
wherein a wireless data communication unit (9) is further preferably provided, by means of which the sensor unit (8) comprising the at least one sensor is connected only wirelessly to a receiver of the communication module (6, 6'),
wherein the sensor unit (8) preferably has an independent energy source,
wherein the at least one sensor preferably comprises light sensors, temperature sensors, motion sensors or smoke sensors, and wherein the communication module (6, 6') is preferably designed such that it actuates the light source (21, 30) on the basis of the light conditions detected by the light sensor, the temperature detected by the temperature sensor, objects located in the detection region of the motion sensor, which objects are preferably mobile, and/or on the basis of a smoke occurrence or smoke density detected by means of the smoke sensor,
wherein the at least one sensor or the sensor unit (8) is preferably provided on the outside of the lighting device (2, 2'), particularly preferably on the outside of a post (20) comprising the lighting device (2, 2'), at the upper end of which the light source (21, 30) is preferably arranged,
wherein the wireless connection is preferably provided by means of short-range radio, preferably by means of Bluetooth, particularly preferably Bluetooth 4.0, and
wherein the independent energy source is preferably a solar module, particularly preferably having energy buffer, or is an internal energy store.

6. Road and path lighting system (1) according to any of the preceding claims, wherein the communication module (6, 6') is designed such that the light source (21, 30) can further be actuated on the basis of data from an external transmission module that are transmitted wirelessly to the communication unit (6, 6').

7. Road and path lighting system (1) according to any of the preceding claims, wherein the lighting device (2, 2'), preferably the communication module (6, 6'), can be parameterized by means of data transmitted wirelessly or in a wired manner to the communication module (6, 6').

8. Road and path lighting system (1) according to either claim 6 or claim 7, wherein the communication module (6, 6') is designed to execute or not execute an actuation of the light source (21, 30) or parameterization of the communication module (6, 6') depending on an authorization of the transmitter transmitting the data, such as the external transmission module (10, 11, 12, 8).

9. Road and path lighting system (1) according to any of the preceding claims, wherein the communication module (6, 6') further comprises a radio transmitter which is connected wirelessly to other communication modules (6', 6) of other lighting devices (2', 2) of the system (1), wherein the communication module (6, 6') is further designed to actuate the lighting device (2, 2') on the basis of the data transmitted by the other communication modules (6', 6) of the other lighting devices (2', 2).

10. Road and path lighting system (1) according to any of claims 5 to 9, wherein the communication module (6, 6') has a processing unit in which the input signals, in particular the transmitted data detected by the at least one sensor, are evaluated and converted into actuation signals,
wherein a data transmitter of the communication module (6, 6'), preferably in the sensor unit (8), and the receiver of the communication module (6, 6'), preferably in the lighting device (2, 2'), particularly preferably on the light source (21, 30), preferably provide the wireless connection between the sensor unit (8) and the receiver of the communication module (6, 6').

11. Method for outputting signals by means of a road and path lighting system (1) comprising a lighting device (2, 2') having a light source (21), a projection unit (3) comprising a further light source (30), and a communication module (6, 6'), wherein the method comprises the following steps:
- receiving input signals transmitted wirelessly or in a wired manner in the communication module (6, 6'),
- actuating the projection unit (3) by means of the communication module (6, 6') on the basis of the input signals, and
- projecting signals onto a projection surface (4, 5) by means of the projection unit (3), wherein the signals are light signals which display information on the projection surface (4, 5) as images,
further comprising a sensor unit (8) comprising a sensor, and a wireless data communication unit (9), wherein the method further comprises the following steps:
- wirelessly transmitting data detected by means of the sensor as input signals to a receiver of the communication module (6, 6') by means of the data communication unit (9),
- receiving the wirelessly transmitted input signals in the communication module (6, 6'), and
- actuating the light sources (21, 30) by means of the communication module (6, 6') on the basis of the transmitted data.

12. Method according to claim 11, wherein the sensor unit (8) is provided on the lighting device (2, 2') and at a distance from the light source (21, 30) and preferably has an independent energy source.

13. Method according to either claim 11 or claim 12, further comprising the steps of:
- generating output signals by means of the communication module (6, 6') on the basis of the received input signals, and
- outputting the output signals to the surroundings, for example via power line communication, short-range radio or as a relay station, preferably to a traffic control center or a car-to-car communication network (C) or another communication module (6', 6) of a further lighting device (2', 2) of the system (1).

14. Method according to any of claims 11 to 13, further comprising the step of:
- parameterizing the lighting device (2, 2'), preferably the communication module (6, 6 '), by means of data transmitted wirelessly or in a wired manner to the communication module (6, 6'),
wherein the parameterization of the communication module (6, 6') is executed or not executed depending on an authorization of the transmitter transmitting the data, such as the external transmission module (10, 11, 12, 8).

## Revendications

1. Système d'éclairage de routes et de chemins (1) présentant :
un dispositif d'éclairage (2, 2') comportant une source lumineuse (21), une unité de projection (3) pour la projection de signaux sur une surface de projection (4, 5) et un module de communication (6, 6') configuré pour commander l'unité de projection (3) sur la base de signaux d'entrée arrivants, dans lequel l'unité de projection (3) présente une autre source lumineuse (30),
dans lequel les signaux d'entrée sont des signaux de données,
dans lequel le module de communication (6, 6') est configuré pour commander la source lumineuse (21) du dispositif d'éclairage (2, 2') et l'unité de projection (3) sur la base des signaux d'entrée,
dans lequel les signaux sont des signaux lumineux représentant des informations sous forme d'images sur la surface de projection (4, 5).

2. Système d'éclairage de routes et de chemins (1) selon la revendication 1, dans lequel l'autre source de lumière (30) est une unité laser ou un luminaire à DEL.

3. Système d'éclairage de routes et de chemins (1) selon l'une des revendications précédentes, dans lequel l'unité de projection (3) est adaptée pour projeter les signaux sur plusieurs surfaces de projection (4, 5).

4. Système d'éclairage de routes et de chemins (1) selon l'une des revendications précédentes, dans lequel le module de communication (6, 6') est en outre adapté pour générer des signaux de sortie à partir des signaux d'entrée arrivants et pour les envoyer à un centre de contrôle du trafic ou un réseau de communication de véhicule à véhicule (C) ou un autre module de communication (6', 6) d'un autre dispositif d'éclairage (2', 2) du système (1), par exemple par l'intermédiaire d'une communication par courants porteurs en ligne, d'une radio à courte portée ou comme station relais.

5. Système d'éclairage de routes et de chemins (1) selon l'une des revendications précédentes, dans lequel les signaux d'entrée sont des signaux de données qui peuvent être transmis au module de communication (6, 6') depuis au moins un capteur, par exemple une unité de capteur (8) du système (1),
dans lequel le module de communication (6, 6') est de préférence configuré de manière à commander la source lumineuse (21) du dispositif d'éclairage (2, 2') et l'unité de projection (3) sur la base des données détectées au moyen de l'au moins un capteur,
dans lequel une unité de communication de données sans fil (9) est en outre de préférence prévue, au moyen de laquelle l'unité de capteur (8) présentant l'au moins un capteur n'est reliée que sans fil à un récepteur du module de communication (6, 6'),
dans lequel l'unité de capteur (8) présente de préférence une source d'énergie autonome,
dans lequel l'au moins un capteur présente de préférence des capteurs de lumière, des capteurs de température, des capteurs de mouvement ou des capteurs de fumée, et dans lequel le module de communication (6, 6') est de préférence configuré de telle manière qu'il commande la source lumineuse (21, 30) sur la base des conditions lumineuses détectées par le capteur de lumière, sur la base de la température détectée par le capteur de température, sur la base d'objets, de préférence mobiles, se trouvant dans la zone de détection du capteur de mouvement et/ou sur la base de la présence de fumée ou de la densité de fumée détectée au moyen du capteur de fumée,
dans lequel l'au moins un capteur ou l'unité de capteur (8) est prévu de préférence sur la face extérieure du dispositif d'éclairage (2, 2'), plus préférablement sur la face extérieure d'un mât (20) présentant le dispositif d'éclairage (2, 2'), au niveau de l'extrémité supérieure duquel la source lumineuse (21, 30) est de préférence disposée,
dans lequel la liaison sans fil est fournie de préférence par radio à courte portée, de préférence par Bluetooth, plus préférablement par Bluetooth 4.0, et
dans lequel la source d'énergie autonome est de préférence un module solaire, plus préférablement comportant un accumulateur d'énergie intermédiaire, ou un accumulateur d'énergie interne.

6. Système d'éclairage de routes et de chemins (1) selon l'une des revendications précédentes, dans lequel le module de communication (6, 6') est configuré de telle manière que la source lumineuse (21, 30) peut en outre être commandée sur la base de données d'un module émetteur externe transmises sans fil à l'unité de communication (6, 6').

7. Système d'éclairage de routes et de chemins (1) selon l'une des revendications précédentes, dans lequel le dispositif d'éclairage (2, 2'), de préférence le module de communication (6, 6'), peut être paramétré au moyen de données transmises sans fil ou par fil au module de communication (6, 6').

8. Système d'éclairage de routes et de chemins (1) selon la revendication 6 ou 7, dans lequel le module de communication (6, 6') est configuré de manière à exécuter ou à ne pas exécuter une commande de la source lumineuse (21, 30) ou un paramétrage du module de communication (6, 6') en fonction d'une autorisation de l'émetteur transmettant les données, tel que le module émetteur externe (10, 11, 12, 8).

9. Système d'éclairage de routes et de chemins (1) selon l'une des revendications précédentes, dans lequel le module de communication (6, 6') présente en outre un émetteur radio relié sans fil à d'autres modules de communication (6', 6) d'autres dispositifs d'éclairage (2', 2) du système (1), dans lequel le module de communication (6, 6') est en outre configuré de manière à commander le dispositif d'éclairage (2, 2') sur la base des données transmises par les autres modules de communication (6', 6) des autres dispositifs d'éclairage (2', 2).

10. Système d'éclairage de routes et de chemins (1) selon l'une des revendications 5 à 9, dans lequel le module de communication (6, 6') présente une unité de traitement dans laquelle les signaux d'entrée, en particulier les données transmises détectées par l'au moins un capteur, sont évalués et convertis en signaux de commande,
dans lequel de préférence un émetteur de données du module de communication (6, 6'), de préférence dans l'unité de capteur (8), ainsi que le récepteur du module de communication (6, 6'), de préférence dans le dispositif d'éclairage (2, 2'), plus particulièrement au niveau de la source lumineuse (21, 30), fournissent la liaison sans fil entre l'unité de capteur (8) et le récepteur du module de communication (6, 6').

11. Procédé permettant l'envoi de signaux au moyen d'un système d'éclairage de routes et de chemins (1) présentant un dispositif d'éclairage (2, 2') comportant une source lumineuse (21), une unité de projection (3) présentant une autre source lumineuse (30) et un module de communication (6, 6'), dans lequel le procédé présente les étapes suivantes :
- réception de signaux d'entrée transmis sans fil ou par fil dans le module de communication (6, 6'),
- commande de l'unité de projection (3) au moyen du module de communication (6, 6') sur la base des signaux d'entrée, et
- projection de signaux sur une surface de projection (4, 5) au moyen de l'unité de projection (3), dans lequel les signaux sont des signaux lumineux représentant des informations sous forme d'images sur la surface de projection (4, 5),
présentant en outre une unité de capteur (8) présentant un capteur, et une unité de communication de données sans fil (9), dans lequel le procédé présente en outre les étapes suivantes:
- transmission sans fil de données détectées au moyen du capteur comme signaux d'entrée à un récepteur du module de communication (6, 6') au moyen de l'unité de communication de données (9),
- réception des signaux d'entrée transmis sans fil dans le module de communication (6, 6'), et
- commande des sources lumineuses (21, 30) au moyen du module de communication (6, 6') sur la base des données transmises.

12. Procédé selon la revendication 11, dans lequel l'unité de capteur (8) est prévue sur le dispositif d'éclairage (2, 2') et à distance de la source lumineuse (21, 30) et présente de préférence une source d'énergie autonome.

13. Procédé selon l'une des revendications 11 ou 12, présentant en outre les étapes de :
- génération de signaux de sortie par le module de communication (6, 6') à partir des signaux d'entrée arrivants, et
- envoi des signaux de sortie à l'environnement, par exemple par l'intermédiaire d'une communication par courants porteurs en ligne, d'une radio à courte portée ou comme station relais, de préférence à un centre de contrôle du trafic ou un réseau de communication de véhicule à véhicule (C) ou un autre module de communication (6', 6) d'un autre dispositif d'éclairage (2', 2) du système (1).

14. Procédé selon l'une des revendications 11 à 13, présentant en outre les étapes de :
- paramétrage du dispositif d'éclairage (2, 2'), de préférence du module de communication (6, 6'), au moyen de données transmises sans fil ou par fil au module de communication (6, 6'),
dans lequel le paramétrage du module de communication (6, 6') est exécuté ou n'est pas exécuté en fonction d'une autorisation de l'émetteur transmettant les données, tel que le module émetteur externe (10, 11, 12, 8).
